# EUROPEAN PATENT APPLICATION

(11) **EP 2 541 945 A2**
(43) Date of publication of application: **02.01.2013**
(21) Application number: 12004741.0
(22) Date of filing: 25.06.2012
(51) Int. Cl.: H04N 13/02

(54) **Method and system for utilizing an image sensor pipeline (ISP) for 3D imaging processing utilizing Z-depth information**

(30) Priority: 30.06.2011 US 201113174364
(71) Applicant: Broadcom Corporation, Irvine, CA 92617 (US)
(72) Inventor: Chen, Xuemin, Rancho Santa Fe CA 92067 (US); Karaoguz, Jeyhan, Irvine CA 92606 (US); Seshadri, Nambirajan, Irvine CA 92603 (US); Boross, Christopher, Sunnyvale CA 94086 (US)
(74) Representative: Jehle, Volker Armin

(57) **Abstract**

A monoscopic video camera may capture, via at least one image sensor, two-dimensional video, and may capture, via at least one depth sensor, corresponding depth information for the captured two-dimensional video. The monoscopic video camera may then detect and/or track objects in the captured two-dimensional video based on the captured corresponding depth information; and processing of image related information corresponding to the objects may be configured based on the detecting and/or tracking of the objects. Type and/or characteristics of each of the objects may be determined during the detecting and/or tracking. Identification of the type and/or characteristics of the objects may be performed based on one or more object recognition algorithms programmed into the monoscopic video camera. Configuration of processing of object image related information may be performed based on preset criteria and/or parameters associated with identified types and/or characteristics of the objects.

## Description

### CLAIM OF PRIORITY

This patent application makes reference to, claims priority to and claims benefit from United States Provisional Application Serial No. 61/377,867, which was filed on August 27, 2010.

The above stated application is hereby incorporated herein by reference in its entirety.

### FEDERALLY SPONSORED RESEARCH OR DEVELOPMENT

[Not Applicable].

### [MICROFICHE/COPYRIGHT REFERENCE]

[Not Applicable].

### FIELD OF THE INVENTION

Certain embodiments of the invention relate to video processing. More specifically, certain embodiments of the invention relate to a method and system for utilizing an image sensor pipeline (ISP) for 3D imaging processing utilizing Z-depth information.

### BACKGROUND OF THE INVENTION

Support and demand for video systems that support three-dimensional (3D) video has increased rapidly in recent years. Both literally and physically, 3D video provides a whole new way to watch video, in home and in theaters. However, 3D video systems are still in their infancy in many ways and there is much room for improvement in terms of both cost and performance.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for utilizing an image sensor pipeline (ISP) for 3D imaging processing utilizing Z-depth information, substantially as shown in and/or described in connection with at least one of the figures, as set forth more completely in the claims.
According to an aspect, a method is provided, comprising:
capturing via at least one image sensor of a monoscopic video camera, a two-dimensional video;
capturing via at least one depth sensor of said monoscopic video camera, corresponding depth information for said captured two-dimensional video;
detecting and/or tracking at least one object in said captured two-dimensional video based on said captured corresponding depth information; and
configuring processing of image related information corresponding to said at least one object based on said detecting and/or tracking of said at least one object.
Advantageously, the method further comprises performing said configuration of processing of image related information by adjusting and/or controlling one or more functions in an image sensor pipeline (ISP) utilized during image processing in said monoscopic video camera.
Advantageously, the method further comprises identifying type and/or characteristics of said at least one object during said detecting and/or tracking.
Advantageously, the method further comprises performing said identification of said type and/or characteristics of said at least one object based on one or more object recognition algorithms.
Advantageously, the method further comprises performing said configuration of processing of image related information based on preset criteria and/or parameters associated with said identified type and/or characteristics of said at least one object.
Advantageously, said configuration of said processing of image related information comprises setting and/or adjusting control parameters for use in determining brightness and/or color information associated with said at least one object during said processing.
Advantageously, the method further comprises performing scene detection based on said two-dimensional video and/or said corresponding depth information.
Advantageously, the method further comprises performing said detecting and/or tracking of said at least one object based on said scene detection.
Advantageously, the method further comprises synchronizing said captured corresponding depth information to said captured two-dimensional video.
Advantageously, the method further comprises composing three-dimensional video from said captured two-dimensional video based on said captured corresponding depth information.
According to an aspect, a system is provided, comprising:
one or more circuits for use in a monoscopic video camera that comprises at least one image sensor and at least one depth sensor, said one or more circuits being operable to:
   capture via said at least one image sensor of a monoscopic video camera, a two-dimensional video;
   capture via said at least one depth sensor of said monoscopic video camera, corresponding depth information for said captured two-dimensional video;
   detect and/or track at least one object in said captured two-dimensional video based on said captured corresponding depth information; and
   configure processing of image related information corresponding to said at least one object based on said detecting and/or tracking of said at least one object.
Advantageously, said one or more circuits comprise an image sensor pipeline (ISP), and said one or more circuits are operable to perform said configuration of processing of image related information by adjusting and/or controlling one or more functions in said image sensor pipeline (ISP) utilized during image processing in said monoscopic video camera.
Advantageously, said one or more circuits are operable to identify type and/or characteristics of said at least one object during said detecting and/or tracking.
Advantageously, said one or more circuits are operable to perform said identification of said type and/or characteristics of said at least one object based on one or more object recognition algorithms.
Advantageously, said one or more circuits are operable to configure said processing of image related information based on preset criteria and/or parameters associated with said identified type and/or characteristics of said at least one object.
Advantageously, said configuration of said processing of image related information comprises setting and/or adjusting control parameters for use in determining brightness and/or color information associated with said at least one object during said processing.
Advantageously, said one or more circuits are operable to perform scene detection based on said two-dimensional video and/or said corresponding depth information.
Advantageously, said one or more circuits are operable to perform said detecting and/or tracking of said at least one object based on said scene detection.
Advantageously, said one or more circuits are operable to synchronize said captured corresponding depth information to said captured two-dimensional video.
Advantageously, said one or more circuits are operable to compose three-dimensional video from said captured two-dimensional video based on said captured corresponding depth information.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram that illustrates an exemplary monoscopic, or single-view, camera embodying aspects of the present invention, compared with a conventional stereoscopic camera.

FIG. 2A is a diagram illustrating an exemplary monoscopic camera, which may be utilized in accordance with an embodiment of the invention.

FIG. 2B is a block diagram illustrating an exemplary image sensor pipeline (ISP), which may be utilized in accordance with an embodiment of the invention.

FIG. 3 is a diagram that illustrates exemplary processing of depth information and 2D image information to generate a 3D image, which may be utilized in accordance with an embodiment of the invention.

FIG. 4A is a diagram that illustrates exemplary detection and/or tracking of objects via a monoscopic camera based on Z-depth information, which may be utilized in accordance with an embodiment of the invention.

FIG. 4B is a diagram that illustrates exemplary selective processing of objects via a monoscopic camera subsequent to detection and/or tracking based on Z-depth information, which may be utilized in accordance with an embodiment of the invention.

FIG. 5 is a flow chart that illustrates exemplary steps for utilizing an image sensor pipeline (ISP) for 3D imaging processing utilizing Z-depth information, in accordance with an embodiment of the invention.

### DETAILED DESCRIPTION OF THE INVENTION

Certain embodiments of the invention may be found in a method and system for utilizing an image sensor pipeline (ISP) for 3D imaging processing utilizing Z-depth information. In various embodiments of the invention, a monoscopic video camera may be utilized to detect and/or track objects at varying depths, and may adaptively process video information associated with each of these objects, based on determined corresponding depths for these objects. In this regard, the monoscopic video camera may capture, via at least one image sensor, two-dimensional video, and may capture, via at least one depth sensor, corresponding depth information for the captured two-dimensional video. The monoscopic video camera may then detect and/or track objects in the captured two-dimensional video, based on the captured corresponding depth information for example. Furthermore, processing of image related information corresponding to the objects may be configured based on the detecting and/or tracking of the objects. In this regard, video processing in the monoscopic video camera may be configured to provide adaptive and/or dynamic setting and/or modification of video information, such as color and/or brightness based on determined types of objects and/or based on determination of relative depth of each of the objects with respect to the monoscopic video camera. Detection of objections may comprise determining type and/or characteristics of each of the objects. In this regard, identification of the type and/or characteristics of the objects may be performed based on one or more object recognition algorithms programmed into the monoscopic video camera.

Configuration of processing of object image related information may be performed based on preset criteria and/or parameters associated with identified types and/or characteristics of the objects. The monoscopic video camera may also be operable to perform scene detection based on the two-dimensional video and/or the corresponding depth information, and object detection and/or tracking may be performed and/or adjusted based on scene detection. In this regard, the scene detection may comprise determining various characteristics associated with scenes in images captured by the monoscopic video camera. Exemplary scene characteristics may comprise type of setting in the scenes, such as rural vs. urban; type of objects present and/or anticipated in the scene, such as trees and/or buildings; and/or chronological information relating to the scene, such as season and/or time of day. The monoscopic video camera may be operable to synchronize the captured corresponding depth information to the captured two-dimensional video, to enable generating 3D perception for at least some images captured via the monoscopic video camera. Accordingly, the monoscopic video camera may compose three-dimensional video from captured two-dimensional video based on corresponding captured depth information. The monoscopic video camera may then render the composed three-dimensional video, autonomously-using integrated display in the monoscopic video camera, or via another display device, to which the 3D video may be communicated directly from the monoscopic video camera or indirectly via intermediate storage devices.

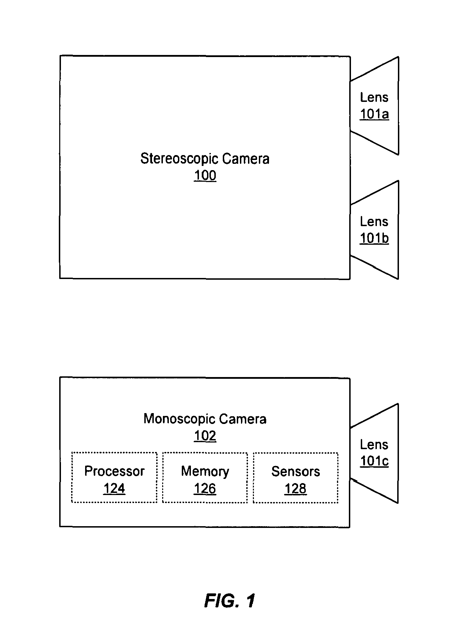

FIG. 1 is a diagram that compares a monoscopic camera embodying aspects of the present invention with a conventional stereoscopic camera. Referring to FIG. 1, there is shown a stereoscopic camera 100 and a monoscopic camera 102.

The stereoscopic camera 100 may comprise suitable logic, circuitry, interfaces, and/or code that may enable capturing and/or generating stereoscopic video and/or images. In this regard, the stereoscopic camera 100 may comprise two lenses 101 a and 101 b. Each of the lenses 101 a and 101 b may capture images from a different viewpoint and images captured via the two lenses 101 a and 101 b may be combined to generate a 3D image. In this regard, electromagnetic (EM) waves in the visible spectrum may be focused on a first one or more image sensors by the lens 101 a (and associated optics) and EM waves in the visible spectrum may be focused on a second one or more image sensors by the lens (and associated optics) 101 b.

The monoscopic camera 102 may comprise suitable logic, circuitry, interfaces, and/or code that may enable capturing and/or generating monoscopic video and/or images. In this regard, the monoscopic camera 102 may capture images via a single viewpoint, corresponding to the lens 101 c for example. EM waves in the visible spectrum may be focused on one or more image sensors by the lens 101 c. The image sensor(s) may capture brightness and/or color information. The captured brightness and/or color information may be represented in any suitable color space such as YCrCb color space or RGB color space. In an exemplary aspect of the invention, the monoscopic camera 102 may be operable to generate 3D video and/or images based on captured 2D video and/or images based on, for example, depth information. In this regard, the monoscopic camera 102 may also capture depth information via the lens 101 c (and associated optics). For example, the monoscopic camera 102 may comprise an infrared emitter, an infrared sensor, and associated circuitry operable to determine the distance to objects based on reflected infrared waves. Additional details of the monoscopic camera 102 are described below.

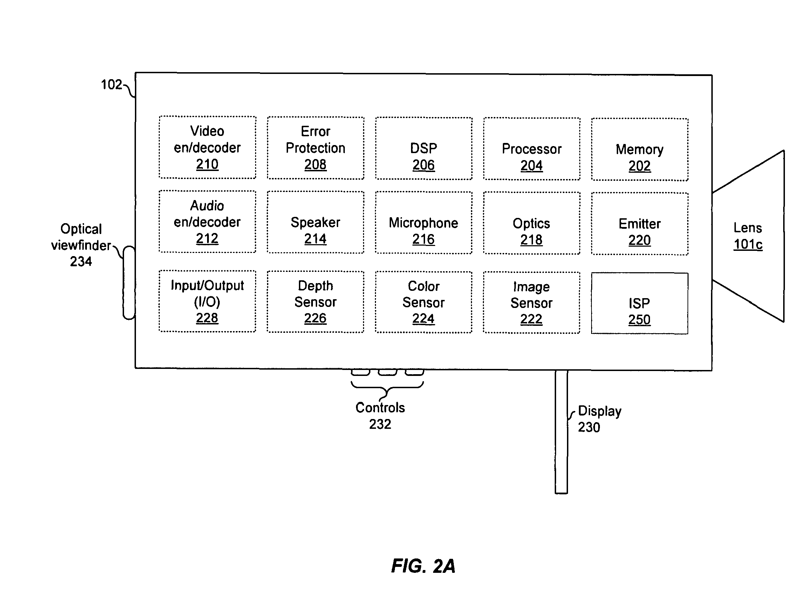

The monoscopic camera may comprise a processor 124, a memory 126, and a sensory subsystem 128. The processor 124 may comprise suitable logic, circuitry, interfaces, and/or code that may be operable to manage operation of various components of the camera and perform various computing and processing tasks. A single processor 124 is utilized only for illustration but the invention is not so limited. In an exemplary embodiment of the invention, various portions of the camera 102 depicted in FIG. 2A below may correspond to the processor 124 depicted in FIG. 1. The memory 106 may comprise, for example, DRAM, SRAM, flash memory, a hard drive or other magnetic storage, or any other suitable memory devices.

The sensory subsystem 128 may comprise a plurality of sensors which may be operable to capture and/or generate video information corresponding to images and/or video streams generated via the monoscopic camera 102. The sensory subsystem 128 may also comprise suitable logic, circuitry, interfaces, and/or code that may be operable to manage and/or control of the various sensors in the sensory subsystem 128, and/or to handling at the least some of the processing of information generated and/or captured thereby. In this regard, the sensory subsystem 128 may enable generating 2D video and corresponding depth and/or color information. The sensory subsystem 128 may comprise, for example, one or more image sensors, one or more depth sensors, and one or more sensors. In this regard, exemplary sensors that may be integrated into the sensory subsystem 128 are described in more detail below with respect to FIG. 2A.

FIG. 2A is a diagram illustrating an exemplary monoscopic camera, in accordance with an embodiment of the invention. Referring to FIG. 2A, there is shown the monoscopic camera 102, which may comprise a memory 202, a processor 204, a digital signal processor (DSP) 206, an error protection module 208, a video encoder/decoder 210, an audio encoder/decoder 212, a speaker 214, a microphone 216, an optics module 218, an emitter 220, an input/output (I/O) module 228, a digital display 230, controls 232, and optical viewfinder 234. The camera 102 may also comprise a plurality of sensors which may be operable to capture and/or generate video information corresponding to images and/or video streams. The camera 102 may comprise, for example, one or more image sensors 222, one or more color sensor 224, and one or more depth sensor 226. The camera 102 may also comprise the lens 101 c, which may be operable to collect and sufficiently focus electromagnetic waves in the visible and infrared spectra to enable capturing images and/or video.

The memory 202 may comprise suitable logic, circuitry, interfaces, and/or code that may enable temporary and/or permanent storage of data, and/or retrieval or fetching thereof. The memory 202 may comprise, for example, DRAM, SRAM, flash memory, a hard drive or other magnetic storage, or any other suitable memory devices. For example, SRAM may be utilized to store data utilized and/or generated by the processor 204 and a hard-drive and/or flash memory may be utilized to store recorded image data and depth data. The processor 204 may comprise suitable logic, circuitry, interfaces, and/or code that may be operable to coordinate operation of the various components of the camera 102. The processor 204 may, for example, run an operating system of the camera 102 and control communication of information and signals between components of the camera 102. The processor 204 may execute instructions stored in the memory 202. The DSP 206 may comprise suitable logic, circuitry, interfaces, and/or code that may be operable to perform complex processing of captured image data, captured depth data, and captured audio data. The DSP 206 may be operable to, for example, compress and/or decompress the data, encode and/or decode the data, and/or filter the data to remove noise and/or otherwise improve perceived audio and/or video quality for a listener and/or viewer.

The error protection module 208 may comprise suitable logic, circuitry, interfaces and/or code that may be operable to perform error protection functions for the monoscopic camera 102. For example, the error protection module 208 may provide error protection to encoded 2D video images and corresponding depth information, and/or encoded audio data for transmission to a video rendering device that may be communicatively coupled to the monoscopic camera 102.

The video encoder/decoder 210 may comprise suitable logic, circuitry, interfaces, and/or code that may be operable to process captured color, brightness, and/or depth data to make the data suitable for conveyance to, for example, the display 230 and/or to one or more external devices via the I/O block 228. For example, the video encoder/decoder 210 may convert between, for example, raw RGB or YCrCb pixel values and an MPEG encoding. Although depicted as a separate block, the video encoder/decoder 210 may be implemented in the DSP 206.

The audio encoder/decoder 212 may comprise suitable logic, circuitry, interfaces, and/or code that may be operable to process captured color, brightness, and/or depth data to make the data suitable for conveyance to, for example, the speaker 214 and/or to one or more external devices via the I/O block 228. For example, the video encoder/decoder 210 may convert between, for example, raw pulse-code-modulated audio and an MP3 or AAC encoding. Although depicted as a separate block, the audio encoder/decoder 212 may be implemented in the DSP 206.

The speaker 214 may comprise suitable logic, circuitry, interfaces, and/or code operable to convert electrical signals into acoustic waves. The microphone 216 may be operable to amplify, equalize, and/or otherwise generate audio signals based on audio information generated in the camera 102. The directionality of the speaker 214 may be controlled electronically and/or mechanically.

The microphone 216 may comprise a transducer and associated logic, circuitry, interfaces, and/or code operable to convert acoustic waves into electrical signals. The microphone 216 may be operable to amplify, equalize, and/or otherwise process captured audio signals. The directionality of the microphone 216 may be controlled electronically and/or mechanically.

The optics module 218 may comprise various optical devices for conditioning and directing EM waves received via the lens 101c. The optics module 218 may direct EM waves in the visible spectrum to the image sensor 222 and direct EM waves in the infrared spectrum to the depth sensor 226. The optics module 218 may comprise, for example, one or more lenses, prisms, color filters, and/or mirrors.

Each image sensor 222 may each comprise suitable logic, circuitry, interfaces, and/or code that may be operable to convert optical signals to electrical signals. Each image sensor 222 may comprise, for example, a charge coupled device (CCD) images sensor or a complimentary metal oxide semiconductor (CMOS) image sensor. Each image sensor 222 may capture 2D brightness and/or color information.

Each color sensor 224 may comprise suitable logic, circuitry, interfaces, and/or code that may be operable to detect color generation and/or generate color related information based thereon in images captures via the camera 102.

Each depth sensor 226 may comprise suitable logic, circuitry, interfaces, and/or code that may be operable to detect EM waves in the infrared spectrum and determine distance to objects based on reflected infrared waves. In an embodiment of the invention, distance may be determined based on time-of-flight of infrared waves transmitted by the emitter 220 and reflected back to the color sensor 224. In an embodiment of the invention, depth may be determined based on distortion of a captured grid.

The input/output module 228 may comprise suitable logic, circuitry, interfaces, and/or code that may enable the camera 102 to interface with other devices in accordance with one or more standards such as USB, PCI-X, IEEE 1394, HDMI, DisplayPort, and/or analog audio and/or analog video standards. For example, the I/O module 228 may be operable to send and receive signals from the controls 232, output video to the display 230, output audio to the speaker 214, handle audio input from the microphone 216, read from and write to cassettes, flash cards, hard disk drives, solid state drives, or other external memory attached to the camera 102, and/or output audio and/or video via one or more ports such as a IEEE 1394 or USB port.

The digital display 230 may comprise suitable logic, circuitry, interfaces, and/or code that may enable displaying video and/or images, captured, generated, and/or processed via the monoscopic camera 102. In this regard, the digital display 230 may comprise, for example, an LCD, LED, OLED, or other digital display technology on which images recorded via the camera 102 may be displayed. In an embodiment of the invention, the digital display 230 may be operable to display 3D images. The controls 232 may comprise suitable logic, circuitry, interfaces, and/or code. The controls 232 may enable a user to interact with the camera 102. For example, controls for controlling recording and playback. In an embodiment of the invention, the controls 232 may enable a user to select whether the camera 102 records and/or outputs video in 2D or 3D modes. The optical viewfinder 234 may enable a user to see what the lens 101 c "sees," that is, what is "in frame."

In an exemplary aspect of the invention, the camera 102 may comprise an image sensor pipeline (ISP) 250. In this regard, the ISP 250 may be implemented as a dedicated component, and/or as part of another component of the camera 102, such as the processor 202 for example. The ISP 250 may comprise suitable circuitry, logic and/or code that may be operable to process imaging (or video) data, which may be received from one or more imaging related sensors, such as image sensors 222, sensor 224, and/or depth sensor 226. In this regard, the ISP 250 may perform and/or support various video processing operations and/or techniques comprising, for example, filtering, demosaic, lens shading correction, defective pixel correction, white balance, image compensation, Bayer interpolation, color transformation, and/or post filtering. The ISP 250 may provide accelerated processing of imaging data. In this regard, the accelerated processing may be achieved by use of pipelined based architecture, with the ISP 250 comprising programmable pipeline structure for example. The ISP 250 may comprise, for example, multiple sensor processing stages, implemented in hardware, software, firmware, and/or any combination thereof. Exemplary processing stages may comprise demosaicing, geometric distortion correction, color conversion, denoising, and/or sharpening, for example. Furthermore, processing of image data may be performed on variable sized tiles, reducing the memory requirements of the ISP 250 processes.

In operation, the camera 102 may be utilized to generate 3D video and/or images based on captured 2D video data and corresponding depth information. For example, the depth sensor(s) 226 may capture depth information and the image sensor(s) 222 may capture 2D image information. Similarly, for a lower-end application of the camera 102, such as a security camera, the image sensor(s) 222 may capture only brightness information for rendering black and white 3D video. The depth information may, for example, be stored and/or communicated as metadata and/or an additional layer of information associated with 2D image information. In this regard, a data structure in which the 2D image information is stored may comprise one or more fields and/or indications that indicate depth data associated with the stored 2D image information is available for rendering a 3D image. Similarly, packets in which the 2D image information is communicated may comprise one or more fields and/or indications that indicate depth data associated with the communicated 2D image information is available for rendering a 3D image. Thus, for outputting 2D video, the camera 101 may read the 2D image information out of memory, and process it to generate a 2D video stream to the display and/or the I/O block. For outputting 3D video, may: (1) read the 2D image information from memory; (2) determine, based on an indication stored in memory with the 2D image information, that associated depth information is available; (3) read the depth information from memory; and (4) process the 2D image information and depth information to generate a 3D video stream.

Processing of the 2D image information and depth information may comprise synchronizing the depth information to the 2D image information. Processing of the 2D image information and depth information may comprise scaling and/or interpolating either or both of the 2D image information and the associated depth information. For example, the resolution of the depth sensor 226 may be less than the resolution of the image sensor 222. Accordingly, the camera 102 may be operable to interpolate between pixels of depth information to generate depth information for each pixel, or group of pixels, of 2D image information. Similarly, the frame rate of the depth sensor 226 may be less than the frame rate of the image sensor 222. Accordingly, the camera 102 may be operable to interpolate between frames of depth information to generate a frame of depth information for each frame of 2D image information.

In various embodiments on the invention, the monoscopic camera 102 may be operable to detect and/or track objects in 2D video captured via the image sensor(s) 222, based on corresponding depth information captured via the depth sensor(s) 226 for example, and/or may adaptively process video information associated with detected and/or tracked objects, to enhance corresponding video images. In this regard, the monoscopic camera 102 may be operable to utilize, for example, one or more recognition algorithms that may enable determining presence of certain objects in scenes captured via the image sensor 222 for example. The object recognition algorithms may detect objects based on, for example, determination of type of object, and/or preconfigured characteristics associated therewith. For example, the object recognition algorithms utilized in the monoscopic camera 102 may detect such objects as persons, or parts thereof such as face or hands for example. Associated characteristics may comprise, for example, size of the object or specific parts thereof, such as face of person, and/or color related information, such as permissible color hues and/or shades. Once an object is detected, the monoscopic camera 102 may continue to track the object in successive image frames. The object tracking may be configured and/or controlled using depth information. This may enable tracking an object as it moves, for example, closer to or further away from the monoscopic camera 102. Accordingly, the monoscopic camera 102 may be operable to adjust characteristics associated with detected objects, such as size and/or relative position to other objects in the scenes, as the tracked objects move within the captured scene.

Adaptive processing of video information associated with detected and/or tracked objects may comprise configuring and/or modifying control parameters and/or criteria pertinent to video processing operations, and/or setting and/or adjusting video information (e.g. color, brightness, and/or shade) associated with the detected objects. Configuration of processing of object image related information may be performed based on preset criteria and/or parameters associated with identified types and/or characteristics of the objects. In this regard, video information associated with certain objects may be generated and/or modified, based on preconfigured criteria for example. For example, in instances where an object is identified as a face, color related video information may be adjusted to ensure based on predetermined criteria associated with acceptable human color hues for example. Furthermore, depth information may be also be utilized in conjunction with object detection and/or tracking during processing of object image related information. For example, the relative size of an object identified as a face may be adjusted based on depth information, to ensure that the size of the face may be appropriate, for example within acceptable range and/or quality, based on identified associated relative depth of the face in relation to the camera 102.

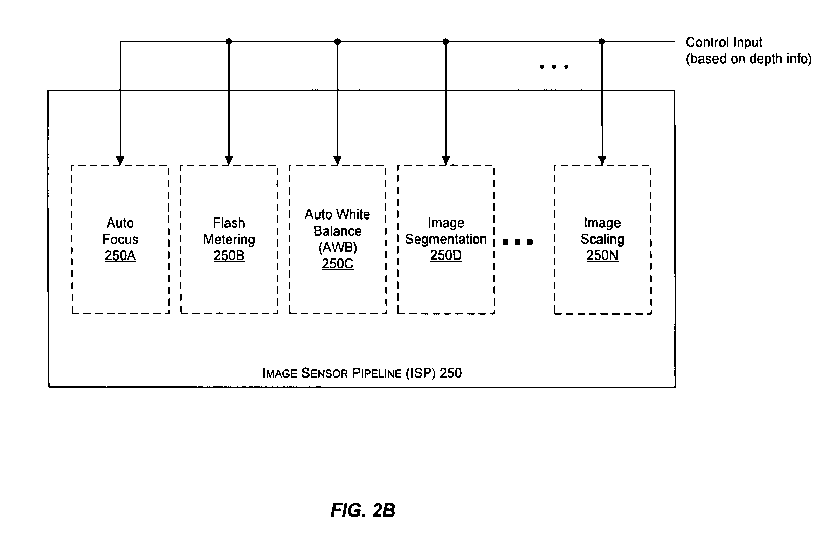

FIG. 2B is a block diagram illustrating an exemplary image sensor pipeline (ISP), which may be utilized in accordance with an embodiment of the invention. Referring to FIG. 2B, there is shown the image sensor pipeline (ISP) 250 of FIG. 2A.

The ISP 250 may comprise suitable circuitry, logic and/or code that may be operable to perform various functions associated with processing of imaging data, which may be received from one or more imaging related sensors, in accelerated manner, by use of pipelined based architecture for example. The ISP 250 may be utilized to enable, for example, pipelined color processing of captured images. In this regard, the ISP 250 may be configured as programmable pipeline structure, comprising a plurality of functions 250_{A} - 250_{N}, each of which associated with handling and/or performing particular image processing function. Accordingly, the ISP 250 may enable accelerated image processing by splitting the processing of data associated with each particular image into stages, to enable concurrently handling multiple images with each of the plurality of functions 250_{A} - 250_{N} being utilized to, for example, perform the corresponding processing function on different images. In other words, ISP 250 may enable handling multiple images since processing of each image may be at different stage at any given point. This may enable implementing various aspects of the invention by adjusting different stages of pipelined functions, without affecting the overall processing duration since some of the operations may be done while other stages are being performed. Data may be moved from any point of the ISP 250 and processed in software and the resulting software processed data may be put into any desired point of the ISP 250 for processing in hardware.

Exemplary processing functions handled and/or implemented by the ISP 250 may comprise, for example, auto-focus function 250_{A}, flash-metering function 250_{B}, auto-white-balance (AWB) function 250_{C}, image segmentation function 250_{D}, and/or image scaling function 250_{N}.

The auto-focus function 250_{A} may comprise performing focusing operations automatically. In this regard, focusing may comprise selecting one or more portions of an image to be focal points during images processing, in which light from these portions and/or objects there in, are optimally captured and/or corresponding image information are consequently very accurate. Auto-focus operations may comprise use and/or control of image sensors to enable selecting focus points, and/or to determine correct focusing associated therewith. In this regard, auto-focus may be active, in which distance to the focus points (or objects) may be determined, and subsequently correct focusing may be effectuated, by controlling and/or adjusting available image sensors, using such techniques as light metering for example. Auto-focus may also be passive, in which focus point selection and/or corresponding focusing adjustment may be performed base don passive analysis of the image, and/or associate image information after the image is captured.

The flash-metering function 250_{B} may comprise controlling flashing operations, such as of the camera 102, based on image sensory information. In this regard, flash-metering may comprise determining and/or measuring levels of light or brightness in a scene with which an image is associated, and selecting and/or controlling based thereon the amount of light emitted by a flash component coupled to and/or integrated into the camera. The light measuring may be performed using one or more sensors, and/or via the camera's lenses.

The AWB function 250_{C} may comprise performing white balance operations automatically. In this regard, white balancing may comprise adjusting color intensities of portions of an image associated with the white color, to ensure that these portions may be render correctly-i.e. with more natural feel, based on identification of the objects associated with these white areas and/or settings in which the image was captured. The white color may typically be function of equal, or near equal mixing of the three primary colors (red, green, and blue). Accordingly, during color balancing, contribution or parameters associated with each of these three colors may be adjusted to adjust the whiteness of the white color region. For example, white balancing may comprise adjusting image portions associated with snow such that the white color associated with the snow may be rendered with a degree of blueness.

The image segmentation function 250_{D} may comprise partitioning an image, whose information is processed, into multiple segments, each of comprising a plurality of contagious and/or non-contagious pixels, based on presence of one or more common characteristics among pixels in each segment. The common characteristics may be determined based on predetermined ranges associated with one or more video information, such as intensity and/or color. Image segmentation may be utilized to enable simplifying and/or changing processing image data, by configuring analysis and/or processing of image data in accordance with the common characteristics associated with each segment. Image segmentation may also be utilized to enable and/or enhance locating objects and boundaries, such as lines or curves, in images.

The image scaling function 250_{N} may comprise resizing images, and/or portions thereof, to increase or decrease the image (or portion) size. In this regard, image scaling may comprise and/or pertain to zooming operations, in which a portion of an image may be adjusted to fit larger or smaller portion of screen. Image scaling may affect various characteristics of the mages, such as smoothness and/or sharpness. In this regard, increasing the size of image may reduce the smoothness and/or sharpness in the image, while decreasing the size of image may enhance its smoothness and/or sharpness. Image scaling may comprise subsampling or upsampling an image, or portion thereof based on whether the image (or portion) is being scaled up or down.

In various embodiments of the invention, the depth information generated and/or captured via the depth sensor 226 may be utilized to enhance and/or improve image processing performed in the camera 102. In this regard, the depth information may be utilized to generate and/or adjust control information utilized in controlling and/or managing operations of the ISP 250. For example, the control information may be utilized to adjust and/or control various stages and/or functions of the ISP 250, such as the auto-focus function 250_{A}, the flash-metering function 250_{B}, the AWB function 250_{C}, the image segmentation function 250_{D}, and/or the image scaling function 250_{N}. For example, the auto-focus function 250_{A} may be adjusted, based on depth information, to enable selecting focus points, and/or configuring focusing operations relating thereto, adaptively at different depths relative to the camera 102. Also, algorithms utilized during AWB operations may be adjusted to enable applying white balancing adaptively at different depths relative to the camera 102. Similarly, algorithms and/or parameters utilized scaling operations may be adjusted to enable performing scaling operations adaptively at different depths relative to the camera 102.

Operations of the ISP 250 may also be controlled and/or adjusted based on detection and/or tracking of objects. In this regard, at least some of the functions 250_{A}-260_{N} of the ISP 250 may be modified and/or configured to support and/or enable performing various operations associated with detecting and/or tracking objects. For example, the auto-focus function 250_{A} may be adjusted to focus on particular types of objects and/or to do so at particular depths, such as by incorporating depth information related parameters into this function. The flash-metering function 250_{B} may also be adjusted such as flashing operations may be tailored to enhance lighting of detected and/or tracked objects. Similarly, the image segmentation function 250_{D} may be adjusted to enhance locating objects and shapes associated therewith, such as lines or curves with particular characteristics, during object detection and/or tracking operations. At least some of the functions 250_{A}-260_{N} of the ISP 250 may also be modified and/or configured to enhance and/or adjust various image processing operations associated with detected and/or tracked objects. For example, the AWB function 250c may be adjusted to perform white balancing adaptively on regions associated with detected and/or tracked objects.

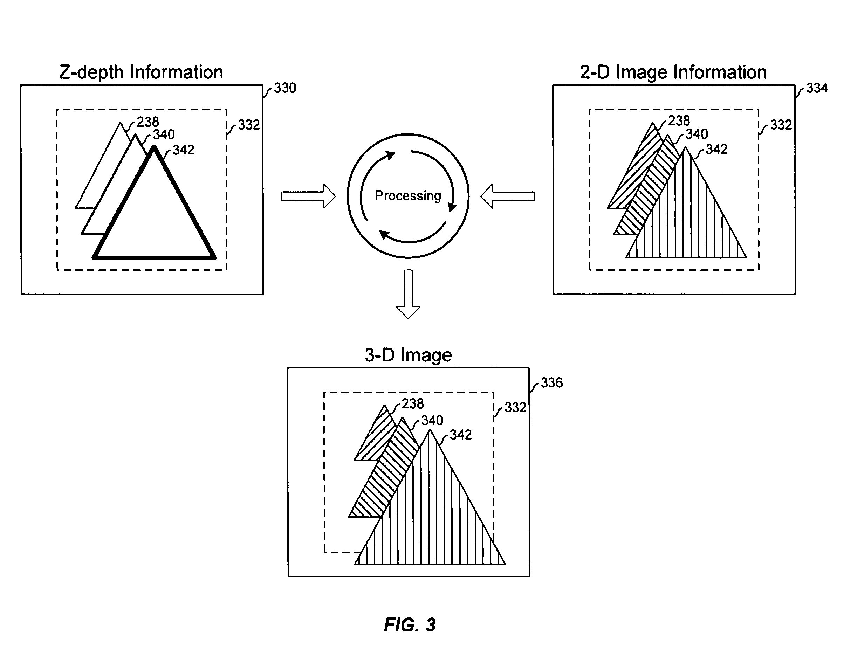

FIG. 3 illustrates processing of depth information and 2D image information to generate a 3D image, which may be utilized in accordance with an embodiment of the invention. Referring to FIG. 3, there is shown a frame 330 of depth information, which may be captured by the depth sensor(s) 226, and a frame 334 of 2D image information, captured by the image sensors 222. In this regard, the depth information 330 and the 2D image information 334 may be processed to generate a frame 336 associated with a corresponding 3D image. Also shown in FIG. 3 is plane 332, indicated by a dashed line, which is merely for illustration purposes to indicate depth on the two dimensional drawing sheets.

In the frame 330, the line weight is utilized to indicate depth-heavier lines being closer to the viewer. Thus, the object 338 is farthest from the camera 102, the object 342 is closest to the camera 102 and the object 104 is at an intermediate distance.

In operation, depth information, such as in frame 330 for example, may be utilized to provide depth related adjustments to corresponding 2D video information, such as in frame 334 for example. For example, the depth information may be mapped to a grayscale, or pseudo-grayscale, image for display to the viewer. Such mapping may be performed by the DSP 206 for example. The image associated with the frame 334 may be a conventional 2D image. A viewer of the frame 234, for example on the display 120 or on a dedicated display device connected to the camera 102 via the I/O module 228, may perceive the same distance to each of the objects 338, 340, and 342. That is, each of the objects 338, 340, and 342 each appear to reside on the plane 332.

Accordingly, 2D video information and corresponding depth information may be processed to enable generating 3D images, associated with frame 336 for example, which may provide depth perception when viewed. For example, the depth information of frame 330 may be utilized to adaptively adjust video information with each of objects in the 2D images of frames 334 to create perception of different depths for objects contained therein. In this regard, the viewer of frames 336, on the display 120 or on a dedicated display device connected to the camera 102 via the I/O module 228 for example, may perceive the object 338 being furthest from the viewer the object 342 being closest to the viewer, and the object 340 being at an intermediate distance. In this regard, the object 338 may appear to be behind the reference plane, the object 340 may appear to be on the reference plane, and the object 342 may appear to be in front of the reference plane.

In various embodiments on the invention, depth information may be utilized to enable detecting and/or tracking objects in captured 2D images and/or video, and/or may be utilized to enable adaptively processing and/or generating video data associated with detected and/or tracked objects. In this regard, object detection and/or tracking may be performed at different depths, corresponding to the depth of each of the objects 338, 340, and 342, to enable detecting presenting of each of objects at the appropriate depth, and to continue tracking these objects thereafter. The object detection may comprise use of recognition algorithms, which may enable determining presence of certain objects. In this regard, object recognition algorithms may detect objects based on, for example, determination of type of object, by classifying the object into one of plurality of preconfigured categories for example, and/or based on characteristics associated therewith. For example, object recognition algorithms may enable detecting objects such as persons, or parts thereof such as face or hands for example.

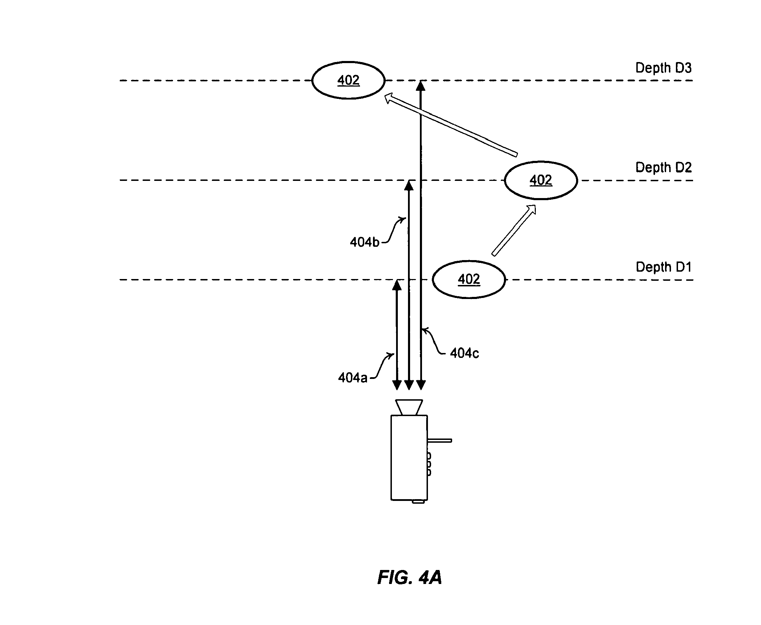

FIG. 4A is a diagram that illustrates exemplary detection and/or tracking of objects via a monoscopic camera based on Z-depth information, which may be utilized in accordance with an embodiment of the invention. Referring to FIG. 4A, there is shown the monoscopic camera 102 and a physical object 402, whose image may be captured via the monoscopic camera 102. The object 402 may comprise, for example, a person and/or a particular part of a person such as face or hands for example.

In operation, the monoscopic camera 102 may be utilized to capture 2D video and to generate corresponding depth information, substantially as described with regard to FIGs. 2 and 3, for example. In this regard, the monoscopic camera 102 may be operable to detect and/or track objects in captured video. For example, the monoscopic camera 102 may be operable to detect presence of video information corresponding to the object 402 in captured 2D video. Furthermore, depth information generated via the monoscopic camera 102 may enable determining a plurality of depth planes, for example, corresponding to different distances from the monoscopic camera 102. Accordingly, the monoscopic camera 102 may be operable to adaptively perform object detection and/or tracking, and/or subsequent processing of video information associated with detected and/or tracked objects. For example, the monoscopic camera 102 may incorporate various object recognition algorithms to enable detecting certain objects. In this regard, the object recognition may be performed based on determination of type, category, and/or characteristics of objects.

In various embodiments on the invention, the monoscopic camera 102 may be operable to detect and/or track objects, such as object 402, based on capturing of 2D video and corresponding depth information. The monoscopic camera 102 may then adaptively process video information associated with detected and/or tracked object 402, to enhance corresponding video images by ensuring that perception of object 402 in images captured by the camera 102 may be acceptable and/or normal to viewers. In this regard, object detection may be performed based on and/or utilizing one or more recognition algorithms, which may enable determining presence of certain objects in scenes captured via the camera 102. The object recognition algorithms may detect objects based on, for example, determination of type of object, and/or preconfigured or predetermined characteristics associated therewith. For example, the object recognition algorithms may enable determining whether the object 402 may comprise a person, or a part thereof such as a face. Furthermore, object tracking may be configured and/or controlled using depth information. This may enable tracking an object as it moves, for example, closer to or further away from the monoscopic camera 102. For example, after initially detecting the object 402, the camera 102 may be operable to track movement of the object 402, in subsequent images, as it moves in the scene captured by the camera 102. The object movement may comprise moving to various depths relative to the camera 102, such as from depth D1, depth D2, then to depth D3. Accordingly, as the object 402 moves to the different depth, processing of video information associated with the object 402 may be continually modified and/or configured to ensure that the video information may remain within acceptable ranges based on identified type and/or characteristics associated with the object 402.

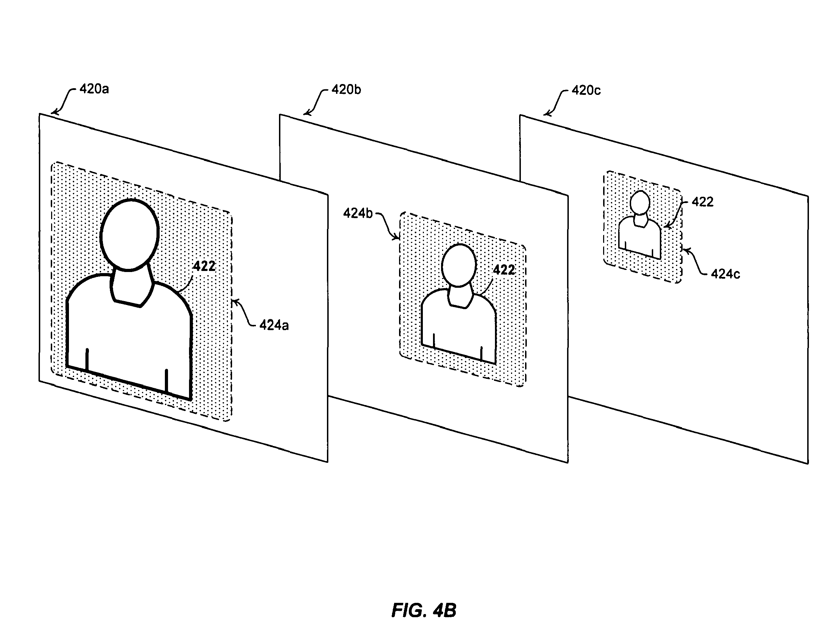

FIG. 4B is a diagram that illustrates exemplary selective processing of objects via a monoscopic camera subsequent to detection and/or tracking based on Z-depth information, which may be utilized in accordance with an embodiment of the invention. Referring to FIG. 4B, there is shown a plurality of successive frames 420a-420c, which may be captured and/or generated via the monoscopic camera 102.

Each of the plurality of frames 420a-420c may comprise video information associated with various elements present in a scene at which the monoscopic camera may be directed while generating and/or capturing the 2D video. In this regard, a particular object 422, which may comprise a person for example, is shown in the plurality of frames 420a-420c.

In this regard, the frames 420a - 420c may comprise image information associated with object 422, which may correspond to a person for example. The image information associated with object 422 may be adjusted based on depth information captured in association with, and corresponding to captured 2D video. In this regard, based on determination of the type of the object, and its relative depth, processing of the video information associated with the object 422 may be performed adaptively. For example, processing of the video information associated with object 422 may be configured to ensure that size of the object 422 may be adjusted, while remaining within acceptable range based on determined type and depth of the object 422, as shown by changes in the size of the object 422 in frames 420a-420c.

Furthermore, object detection and/or processing of video information associated with objects may be adaptively configured based on scene detection. In this regard, scene detection may comprise determining various characteristics associated with scenes in images captured by the monoscopic video camera. Exemplary scene characteristics may comprise type of setting in the scenes, such as rural vs. urban; type of objects present and/or anticipated in the scene, such as trees and/or buildings; and/or chronological information relating to the scene, such as season and/or time of day. For example, the characteristics of the scene may be utilized to control and/or adjust object detection. In this regard, object recognition may be configured to enable detecting shape of person in shaded areas, such as in shadow of trees for example. Furthermore, processing of video information associated with objects may be configured based on region surrounding the object. For example, shade and/or color related information associated with object 422 may be set and/or modified based on determination of the type of the settings around the object 422. Video information associated with object 422 may be adjusted based on surrounding regions 424a-424c, in frames, respectively.

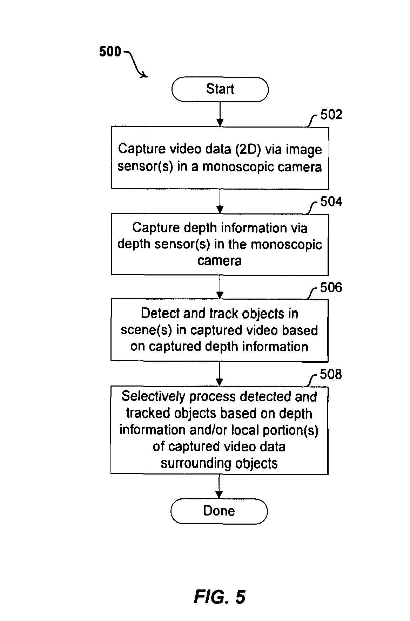

FIG. 5 is a flow chart that illustrates exemplary steps for utilizing an image sensor pipeline (ISP) for 3D imaging processing utilizing Z-depth information, in accordance with an embodiment of the invention. Referring to FIG. 5, there is shown a flow chart 500 comprising a plurality of exemplary steps that may be performed to enable performing utilizing an image sensor pipeline (ISP) for 3D imaging processing utilizing Z-depth information during video processing.

In step 502, 2D video data may be captured via image sensor(s) in a monoscopic camera. In step 504, depth information may be captured via depth sensor(s) in the monoscopic camera. In this regard, the captured depth information may correspond to the captured 2D video. In step 506, one or more objects may be detected and/or tracked in scene(s) in the captured video, based on captured depth information for example. In this regard, at least some of the object detection and/or operations may be performed based on various stages and/or functions in the ISP 250. Furthermore, at least some stages and/or functions of the ISP 250 may be modified and/or adjusted to support object detection and/or tracking operations. In step 508, selective and/or adaptive processing of video information associated with detected and/or tracked objects may be performed based on depth information and/or local portion(s) of captured video data surrounding objects. In this regard, at least some of the adaptive and/or selective video processing associated with detected and/or tracked objects may be performed by modifying and/or adjusting settings of various stages and/or functions in the ISP 250.

Various embodiments of the invention may comprise a method and system for utilizing an image sensor pipeline (ISP) for 3D imaging processing utilizing Z-depth information. The monoscopic video camera 102 may be utilized to detect and/or track, based on sensory information captured via one or more image sensors 222, color sensors 224, and/or depth sensors 226, objects at varying depths, and may adaptively process video information associated with each of these objects, based on determined corresponding depths for these objects. In this regard, the monoscopic video camera 102 may capture, via image sensors 222 and/or color sensors 224, two-dimensional video, and may capture, via depth sensor 226, corresponding depth information for the captured two-dimensional video. The monoscopic video camera may then detect and/or track objects in the captured two-dimensional video, based on the captured corresponding depth information for example. Furthermore, processing of image related information corresponding to the objects may be configured based on the detecting and/or tracking of the objects. In this regard, object detection/tracking based configuration of image processing may comprise adjusting and/or controlling one or more functions 250_{A}-250_{N} in the ISP 250. The image processing of the monoscopic video camera 102 may be configured to provide adaptive and/or dynamic setting and/or modification of video information, such as color and/or brightness based on determined types of objects and/or based on determination of relative depth of each of the objects with respect to the monoscopic video camera 102. Detection of objections may comprise determining type and/or characteristics of each of the objects. In this regard, identification of the type and/or characteristics of the objects may be performed based on one or more object recognition algorithms programmed into the monoscopic video camera 102. Configuring image processing of objects image related information may be performed based on preset criteria and/or parameters associated with identified types and/or characteristics of the objects. The monoscopic video camera 102 may be operable to synchronize the captured corresponding depth information to the captured two-dimensional video, to enable generating 3D perception for at least some images captured via the monoscopic video camera 102.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for utilizing an image sensor pipeline (ISP) for 3D imaging processing utilizing Z-depth information.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method, comprising:
capturing via at least one image sensor of a monoscopic video camera, a two-dimensional video;
capturing via at least one depth sensor of said monoscopic video camera, corresponding depth information for said captured two-dimensional video;
detecting and/or tracking at least one object in said captured two-dimensional video based on said captured corresponding depth information; and
configuring processing of image related information corresponding to said at least one object based on said detecting and/or tracking of said at least one object.

2. The method according to claim 1, comprising performing said configuration of processing of image related information by adjusting and/or controlling one or more functions in an image sensor pipeline (ISP) utilized during image processing in said monoscopic video camera.

3. The method according to claim 1, comprising identifying type and/or characteristics of said at least one object during said detecting and/or tracking.

4. The method according to claim 3, comprising performing said identification of said type and/or characteristics of said at least one object based on one or more object recognition algorithms.

5. The method according to claim 3, comprising performing said configuration of processing of image related information based on preset criteria and/or parameters associated with said identified type and/or characteristics of said at least one object.

6. The method according to claim 1, wherein said configuration of said processing of image related information comprises setting and/or adjusting control parameters for use in determining brightness and/or color information associated with said at least one object during said processing.

7. The method according to claim 1, comprising performing scene detection based on said two-dimensional video and/or said corresponding depth information.

8. The method according to claim 7, comprising performing said detecting and/or tracking of said at least one object based on said scene detection.

9. The method according to claim 1, comprising synchronizing said captured corresponding depth information to said captured two-dimensional video.

10. The method according to claim 1, comprising composing three-dimensional video from said captured two-dimensional video based on said captured corresponding depth information.

11. A system, comprising:
one or more circuits for use in a monoscopic video camera that comprises at least one image sensor and at least one depth sensor, said one or more circuits being operable to:
capture via said at least one image sensor of a monoscopic video camera, a two-dimensional video;
capture via said at least one depth sensor of said monoscopic video camera, corresponding depth information for said captured two-dimensional video;
detect and/or track at least one object in said captured two-dimensional video based on said captured corresponding depth information; and
configure processing of image related information corresponding to said at least one object based on said detecting and/or tracking of said at least one object.

12. The system according to claim 11, wherein said one or more circuits comprise an image sensor pipeline (ISP), and said one or more circuits are operable to perform said configuration of processing of image related information by adjusting and/or controlling one or more functions in said image sensor pipeline (ISP) utilized during image processing in said monoscopic video camera.

13. The system according to claim 11, wherein said one or more circuits are operable to identify type and/or characteristics of said at least one object during said detecting and/or tracking.

14. The system according to claim 13, wherein said one or more circuits are operable to perform said identification of said type and/or characteristics of said at least one object based on one or more object recognition algorithms.

15. The system according to claim 13, wherein said one or more circuits are operable to configure said processing of image related information based on preset criteria and/or parameters associated with said identified type and/or characteristics of said at least one object.
